# DEMANDE DE BREVET EUROPEEN

(11) **EP 1 188 972 A1**
(43) Date de publication de la demande: **20.03.2002**
(21) Numéro de dépôt: 00870206.0
(22) Date de dépôt: 15.09.2000
(51) Int. Cl.: F16J 15/44

(54) **Joint carbone axial sans contact pour une enceinte de palier**

(71) Demandeur: Techspace Aero S.A., 4041 Herstal (BE)
(72) Inventeur: Tran, Quac Hung, 4020 Liege (BE); Rouelle, Sébastien, 4560 Bois-et-Borsu (BE)
(74) Mandataire: Van Malderen, Michel

(57) **Abrégé**

La présente invention se rapporte à un dispositif de joint d'étanchéité de palier de turbomachine, comprenant un anneau tournant (3) monté sur la partie de manchon (15) située du côté de l'enceinte à huile (17) et un anneau de segments de carbone (2) ne présentant pas de contact avec l'arbre (16), ni avec le support de joint (11). L'anneau de segments de carbone (2) s'appuie axialement contre un support annulaire (9) au moyen de ressorts (7). La face radiale (20) de l'anneau de segments de carbone (2) coopére avec l'anneau tournant (3) par la face radiale (19) de l'anneau tournant (3), par l'intermédiaire de rainures de portance (24) usinées sur l'anneau tournant (3), de manière à assurer une étanchéité dynamique en fonctionnement sans frottement entre les faces radiales.

## Description

### Objet de l'invention

La présente invention se rapporte à un nouveau dispositif de joint d'étanchéité pour une enceinte de palier de turbomachine. Cette enceinte de palier fonctionne aussi bien aux très hautes qu'aux très basses températures et peut être soumise à la pression inverse.

### Arrière-plan technologique et état de la technique

De manière classique, un palier de turbomachine supportant un arbre tournant à l'intérieur d'un carter fixe comporte un roulement disposé dans une enceinte où sa lubrification est assurée. Cependant, toute migration d'huile doit être évitée vers certains compartiments de la turbomachine. L'étanchéité doit ainsi être assurée à la séparation entre l'enceinte de palier contenant de l'huile et une enceinte voisine à l'air qui doit être maintenue exempte d'huile.

Diverses solutions ont été mises en oeuvre dans ce but. Des joints à labyrinthe ont ainsi été utilisés et présentent l'intérêt de leur simplicité de fabrication et d'une longue durée de vie. Toutefois, ils peuvent occasionner des fuites d'air importantes préjudiciables aux performances et les balourds de l'arbre peuvent entraîner des détériorations.

Il en résulte une augmentation des consommations d'huile entraînée par l'air vers les déshuileurs air-huile et des fuites d'huile restent possibles de l'enceinte à huile vers l'enceinte à air.

D'autres solutions utilisent des joints en carbone associés à diverses modalités de mise en place. Notamment, le document EP-A-0 967 424 illustre un exemple de réalisation de joint carbone axial sans contact. Le document EP-A-0 387 122 illustre par ailleurs un exemple de réalisation de joint radial segmenté avec contact. Enfin, un autre exemple est montré par EP-A-0 562 895.

On note que l'utilisation de joints axiaux ou radiaux avec contacts réduit largement les fuites d'air vers les enceintes à huile et, par conséquent, la consommation d'huile après le passage à travers un déshuileur. Cependant les répercussions des balourds de l'arbre ne sont pas maîtrisées et des usures résultent de frottements importants, ce qui limite la durée de vie de ces joints. Celle-ci, généralement plus courte que celles des labyrinthes, est fréquemment de l'ordre de quelques milliers d'heures et donc insuffisante pour les applications visées par la présente invention. En plus, ces joints présentent des fuites d'huile pour les pressions inverses.

### Buts de l'invention

La présente invention vise à fournir un nouveau joint d'étanchéité dans les enceintes de palier de turbomachine permettant de contrôler la fuite d'air de l'enceinte à air vers l'enceinte à huile, en vue de contrôler ainsi la consommation d'huile par le déshuileur air-huile.

Un but complémentaire de la présente invention est d'éviter la fuite d'huile de l'enceinte à huile vers l'enceinte à air, afin de ne pas polluer l'air de la cabine ou de l'habitacle alimenté(e) par des prélèvement dans les compresseurs.

Un but complémentaire de la présente invention est de contrôler l'usure et l'échauffement des joints par frottement afin de réaliser la durée de vie normale du moteur et d'éviter la cokéfaction de l'huile.

### Principaux éléments caractéristiques de l'invention

La présente invention se rapporte à un dispositif de joint d'étanchéité de palier de turbomachine, ladite turbomachine comportant une enceinte à huile et une enceinte à air, ledit palier comportant un roulement monté entre un manchon solidaire d'un arbre mobile, un support de palier, un support de joint, ledit dispositif séparant l'enceinte à huile du roulement et de l'enceinte à air de la turbomachine, caractérisé en ce qu'il comprend un anneau tournant monté sur la partie de manchon située du côté de l'enceinte à huile et un anneau de segments de carbone ne présentant pas de contact avec l'arbre, ni avec le support de joint, ledit anneau de segments de carbone s'appuyant axialement contre un support annulaire au moyen de ressorts, la face radiale dudit anneau de segments de carbone coopérant avec l'anneau tournant par la face radiale dudit anneau tournant, par l'intermédiaire de rainures de portance usinées sur ledit anneau tournant.

Ce dispositif permet d'assurer une étanchéité dynamique de la turbomachine en fonctionnement, sans frottement entre les faces radiales de l'anneau de segments de carbone et de l'anneau tournant respectivement.

L'enceinte de palier équipée d'un dispositif de joint d'étanchéité selon l'invention fonctionne aussi bien aux très hautes qu'aux très basses températures et est soumise, le cas échéant, à la pression inverse.

Selon une modalité de réalisation préférentielle de l'invention, l'anneau de segments de carbone comporte des moyens pour assurer une étanchéité semi-statique, usinés directement sur l'anneau de segments de carbone, cette étanchéité semi-statique étant assurée en outre par la compression des segments de carbone sur le support de joint à l'aide d'un ressort d'expansion circulaire.

Avantageusement, l'anneau de segments de carbone est maintenu sans contact avec l'anneau tournant, en fonctionnement, dans le support de joint, grâce aux rainures de portance.

De préférence, l'anneau tournant est maintenu dans la direction axiale par un ressort annulaire, centré sur le manchon à l'aide d'un joint élastique et entraîné en rotation par des goupilles.

Selon une autre caractéristique de l'invention, un dispositif de pompage d'air par vis et abradable, disposé entre le support de joint et le manchon, assure la compression de l'air afin de réaliser une surpression de l'air à l'entrée de l'anneau de segments de carbone.

De préférence, les rainures de portance sont disposées sur la surface de l'anneau tournant, de manière telle qu'elles assurent une étanchéité dynamique et une élévation de pression air suffisante pour annihiler la pression inverse.

De manière particulièrement avantageuse, le joint est positionné axialement par une cale de réglage et est muni d'un dispositif de blocage anti-rotation, le dispositif de blocage assurant également le blocage axial de l'anneau de segments de carbone à l'état libre.

### Brève description des figures

La figure 1 représente, selon une vue en coupe par un plan passant par l'axe de rotation de l'arbre, une partie de palier de turbomachine comportant un dispositif de joint d'étanchéité d'enceinte conforme à la présente invention.

La figure 2 une vue de détail agrandi de l'anneau de segments de carbone.

La figure 3 représente une vue de détail de l'anneau tournant, montrant un exemple de rainures de portance d'étanchéité du joint.

### Description détaillée de l'invention

Les joints carbone axiaux sans contact pour les pressions inverses et pour les très hautes ou très basse températures, selon l'invention, sont des améliorations techniques des joints carbone axiaux avec ou sans contacts classiques.

Ils apportent les avantages suivants :
- très faible fuite d'air de l'enceinte d'air vers l'enceinte d'huile ;
- très faible consommation d'huile à travers les déshuileurs;
- pas de fuite d'huile de l'enceinte d'huile vers l'enceinte d'air, même pour la pression inverse ;
- utilisation à très haute et très basse température ;
- pas de frottement et d'usure, donc très longue durée de vie ;
- insensibilité aux balourds nominaux de l'arbre.

La conception des joints carbone axiaux sans contact dans ces conditions demande des attentions particulières sur l'équilibre de pression autour de l'anneau de carbone, sans joints secondaires et sans déformation de l'anneau tournant.

Le jeu de fuite est suffisamment grand pour assurer le non-contact du joint et suffisamment petit pour assurer la fuite d'air objective et pas de fuite d'huile.

La forme et le sens des rainures sur l'anneau tournant doivent créer un film d'air qui sépare l'anneau de carbone de l'anneau tournant.

Un système de pressurisation supplémentaire devant l'entrée d'air du joint permet de contrebalancer la pression inverse.

D'autres caractéristiques et avantages de l'invention seront mieux compris à la lecture de la description qui va suivre d'un mode de réalisation de l'invention, en référence aux dessins annexés.

### Description d'une forme d'exécution préférée de l'invention

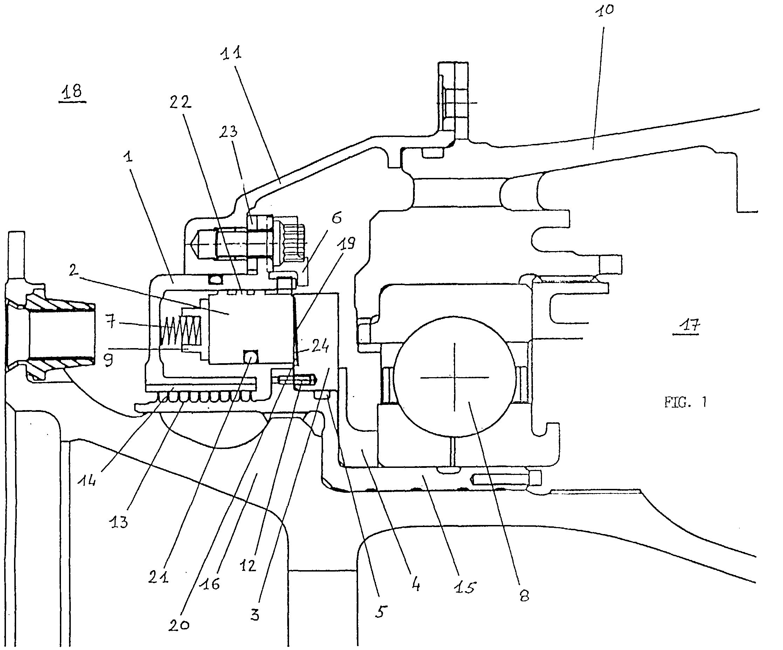

Suivant la représentation donnée par la figure 1, un arbre 16 est supporté en rotation par un palier porté par un carter ou support de palier 10 et comportant un roulement 8. Le roulement 8 est compris dans une enceinte dite à huile 17, où sont présents à la fois de l'air et de l'huile du fait de la lubrification dudit roulement assurée de manière connue en soi et qui n'a pas été représentée sur la figure 1. Au-delà du palier de support, l'arbre 16 est entouré d'une enceinte dite à air 18. Celle-ci doit rester exempte d'huile au niveau des prélèvements d'air effectués de manière connue en soi, exigeant l'utilisation d'un air propre, afin de pas aggraver les problèmes de pressurisation et de filtration.

La forme d'exécution préférée de l'invention proposée ci-après évite les divers inconvénients de l'état de la technique, tout en assurant l'étanchéité recherchée entre l'enceinte à air 18 et l'enceinte à huile 17, même pour les cas de pression inverse et de très haute ou très basse température.

Le dispositif de joint d'étanchéité répondant à ces conditions est caractérisé en ce qu'il comprend :
- une enveloppe 1 de la partie statique du joint ;
- un anneau de segments de carbone 2 ;
- un anneau tournant 3 en carbure ou revêtu de carbure générant un effet de portance sur la surface de contact 19, via des rainures coopérant avec la surface 20 de l'anneau de segments de carbone 2.

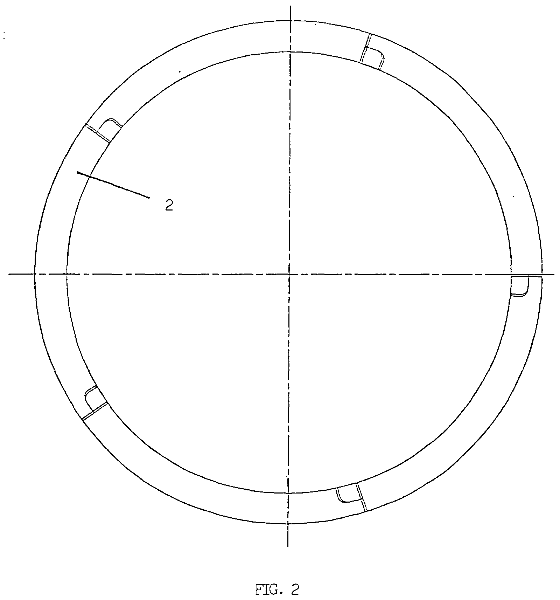

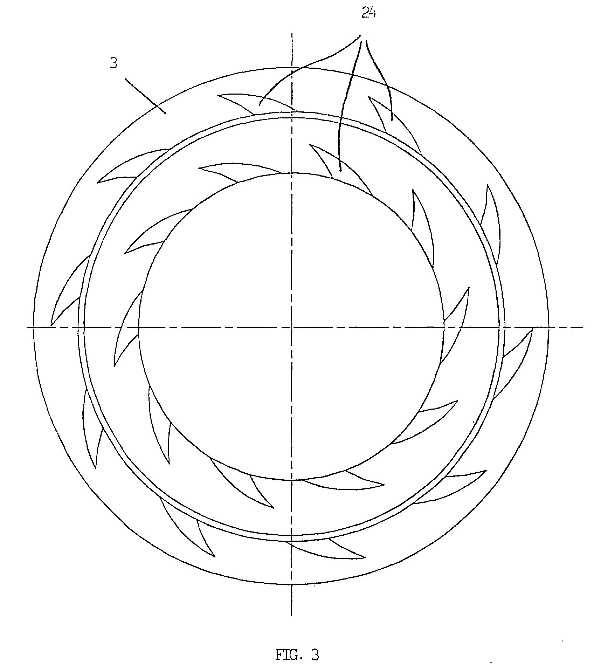

Les détails de réalisation de l'anneau de segments de carbone 2 et de l'anneau tournant 3 sont représentés respectivement sur les figures 2 et 3.

L'anneau tournant 3 est centré, mais non fixé, sur un manchon 15, qui est lui-même fixé sur l'arbre 16, à l'aide d'un joint élastique 5 permettant le rattrapage du jeu et résistant à des températures de fonctionnement. L'ensemble se trouve devant un roulement 8, lui-même monté sur un support 10.

L'anneau tournant 3 est entraîné par des goupilles de blocage anti-rotation 12 et maintenu seulement en déplacement axial par un ressort 4, par exemple un ressort en anneau.

Un système de blocage axial et anti-rotation 6 permet à l'anneau de carbone 2 de rester dans son support 1, à l'état libre et en fonctionnement.

Une charge axiale pour maintenir le contact entre l'anneau de segments de carbone 2 et l'anneau tournant 3, à l'état libre, est réalisée par des ressorts axiaux 7, maintenus par un anneau de maintien 9.

Une étanchéité semi-statique secondaire 22, usinée directement dans l'anneau de segments de carbone 2, possède des températures limites de fonctionnement voisines de celles de l'anneau de segments de carbone 2. Cette étanchéité statique est assurée par un ressort d'expansion circulaire 21 qui réalise le contact entre l'anneau de segments de carbone 2 et le support du joint 1.

Un système de pompage d'air par vis 13 et abradable 14 permet de ramener la pression d'air de l'enceinte d'air 18, au niveau de l'entrée du joint carbone, à une valeur supérieure à celle de l'enceinte d'huile 17, afin de garantir l'absence de fuite d'huile dans toutes les configurations de vol.

La chambre à air 18 assure donc la pressurisation côté air de l'anneau de segments de carbone 2 et la chambre à huile 17 assure la pression côté huile de l'enceinte de paliers.

Un support il associe la fixation de l'enveloppe 1 avec le réglage de position axiale par une cale 23 et sépare la chambre à air 18 de la chambre à huile 17.

Ces dispositions, remarquables selon l'invention, permettent d'atteindre les buts recherchés. Notamment, la fuite d'air de l'enceinte à air vers l'enceinte à huile est très réduite, ce qui permet de contrôler la consommation d'huile et d'éviter une influence néfaste sur les performances. La fuite d'huile de l'enceinte à huile vers l'enceinte à air, dans la condition de pression inverse, est également évitée, ce qui permet de ne pas polluer l'air utilisé dans les prélèvements de l'avion. En supprimant le frottement, les échauffements du joint sont évités, de même que les détériorations et/ou l'usure qui en résultent. Les durées de vie de joints sont donc significativement allongées. En outre, le dispositif fonctionne respectivement aux très hautes et très basses températures présentes dans les turbomachines.

## Revendications

1. Dispositif de joint d'étanchéité de palier de turbomachine, ladite turbomachine comportant une enceinte à huile (17) et une enceinte à air (18), ledit palier comportant un roulement (8) monté entre un manchon (15) solidaire d'un arbre mobile (16), un support de palier (10), un support de joint (11), ledit dispositif séparant l'enceinte à huile (17) du roulement (8) et de l'enceinte à air (18) de la turbomachine, **caractérisé en ce qu'**il comprend un anneau tournant (3) monté sur la partie de manchon (15) située du côté de l'enceinte à huile (17) et un anneau de segments de carbone (2) ne présentant pas de contact avec l'arbre (16), ni avec le support de joint (11), ledit anneau de segments de carbone (2) s'appuyant axialement contre un support annulaire (9) au moyen de ressorts (7), la face radiale (20) dudit anneau de segments de carbone (2) coopérant avec l'anneau tournant (3) par la face radiale (19) dudit anneau tournant (3), par l'intermédiaire de rainures de portance (24) usinées sur ledit anneau tournant (3), de manière à assurer une étanchéité dynamique en fonctionnement sans frottement entre les faces radiales (19,20).

2. Dispositif de joint d'étanchéité de palier selon la revendication 1, **caractérisé en ce que** l'anneau de segments de carbone (2) comporte des moyens pour assurer une étanchéité semi-statique (22), usinés directement sur l'anneau de segments de carbone (2), cette étanchéité semi-statique (22) étant assurée en outre par la compression des segments de carbone sur le support (1) à l'aide d'un ressort d'expansion circulaire (21).

3. Dispositif de joint d'étanchéité de palier selon l'une des revendications 1 ou 2, **caractérisé en ce que** l'anneau de segments de carbone (2) est maintenu sans contact avec l'anneau tournant (3), en fonctionnement, dans le support (1), grâce aux rainures de portance (24).

4. Dispositif de joint d'étanchéité de palier selon l'une quelconque des revendications précédentes, **caractérisé en ce que** l'anneau tournant (3) est maintenu dans la direction axiale par un ressort annulaire (4), centré sur le manchon (15) à l'aide d'un joint élastique (5) et entraîné en rotation par des goupilles (12).

5. Dispositif de joint d'étanchéité de palier selon l'une quelconque des revendications précédentes, **caractérisé en ce qu'**un dispositif de pompage d'air par vis (13) et abradable (14), disposé entre le support (1) et le manchon (15), assure la compression de l'air afin de réaliser une surpression de l'air à l'entrée de l'anneau de segments de carbone (2).

6. Dispositif de joint d'étanchéité de palier selon l'une quelconque des revendications précédentes, **caractérisé en ce que** lesdites rainures de portance (24) sont disposées sur la surface (19) de l'anneau tournant (3) de manière telle qu'elles assurent une étanchéité dynamique et une élévation de pression d'air suffisante pour annihiler la pression inverse.

7. Dispositif de joint d'étanchéité de palier selon l'une quelconque des revendications précédentes, **caractérisé en ce que** le joint est positionné axialement par une cale de réglage (23) et est muni d'un dispositif de blocage anti-rotation (6), ledit dispositif de blocage (6) assurant également le blocage axial de l'anneau de segments de carbone (2) à l'état libre.

8. Utilisation d'un dispositif de joint d'étanchéité, selon l'une quelconque des revendications précédentes, pour assurer l'étanchéité d'un palier de turbomachine, fonctionnant aux très hautes et aux très basses températures et soumise à la pression inverse.
